# EUROPÄISCHE PATENTSCHRIFT

(11) **EP 1 247 043 B1**
(45) Veröffentlichungstag und Bekanntmachung des Hinweises auf die Patenterteilung: **15.11.2006**
(21) Anmeldenummer: 01907348.5
(22) Anmeldetag: 12.01.2001
(51) Int. Cl.: F21V 8/00, G02B 6/00

(54) **Flache Beleuchtungseinheit**
Flat lighting device
Dispositif d'éclairage plat

(30) Priorität: 14.01.2000 DE 10001412
(43) Veröffentlichungstag der Anmeldung: 09.10.2002
(73) Patentinhaber: SIEMENS AKTIENGESELLSCHAFT, 80333 München (DE)
(72) Erfinder: MURR, Jochen, 55237 Bornheim (DE); WAMMES, Klaus, 67595 Bechtheim (DE)
(86) Internationale Anmeldenummer: PCT/DE2001/000115
(87) Internationale Veröffentlichungsnummer: WO 2001/051848

(56) Entgegenhaltungen:
- EP-A- 0 751 340
- EP-A- 1 076 205
- WO-A-96/17207
- JP-A- 9 304 623

## Beschreibung

Die Erfindung betrifft eine Beleuchtungseinheit nach dem Oberbegriff von Anspruch 1.

Eine derartige Beleuchtungseinheit ist aus der JP-09-304623 bekannt.

Flache Beleuchtungseinheiten, die ihr Licht gleichmäßig über eine größere Lichtabstrahlfläche abgeben, werden insbesondere als Hintergrundbeleuchtung (backlight) für Anzeigeeinheiten mit nicht selbstleuchtenden Anzeigeelementen, z.B. Flüssigkristalldisplays, benötigt.

Bei den sogenannten back-lit backlights sind Lichtquellen, insbesondere Leuchtstoffröhren, hinter einer Streuscheibe oder -folie (Diffusor) angeordnet. Je größer der Abstand zwischen den Lichtquellen ist, um so größer muß der Abstand zwischen den Lichtquellen und dem Diffusor sein, um eine möglichst gleichmäßige Verteilung des Lichts durch den Diffusor zu erhalten. Daraus kann sich eine relativ große Bauhöhe der Beleuchtungseinheit ergeben. Darüber hinaus führt der Ausfall einer der Lichtquellen unmittelbar zu einer ungleichmäßigen Lichtverteilung. Schließlich wirkt der Diffusor lichtabsorbierend, wodurch die Lichtausbeute verringert wird.

Bei den sogenannten edge-lit backlights sind die Lichtquellen im Bereich mindestens einer Schmalseite einer lichtführenden Platte angeordnet, die über eine ihrer Hauptseiten das Licht gleichmäßig verteilt abstrahlt. Dazu kann die lichtführende Platte auf ihrer von der Hauptseite abgewandten Seite eine Gitterstruktur aufweisen, die das ansonsten in der Platte durch Totalreflektion an den übrigen Flächen geführte Licht gleichmäßig verteilt über die Hauptseite ausstrahlt. Da das Licht mit zunehmenden Abstand von der Lichtquelle schwächer wird, muß sich die Gitterweite der Gitterstruktur in Abhängigkeit vom Abstand zu der Schmalseite der lichtführenden Platte mit der dahinter liegenden Lichtquelle ändern.

Bei einer aus der US-A-5 542 017 bekannten Beleuchtungseinheit weist die lichtführende Platte Volumenelemente mit unterschiedlichen Brechungsindizes auf, wodurch die gleichmäßige Verteilung des seitlich in die Platte eingestrahlten Lichts erreicht wird. Auch hier muß der Streuungsgrad als Funktion des Abstandes von der Lichtquelle eingestellt sein. Die Herstellung der lichtführenden Platte ist daher nicht unabhängig von den jeweiligen Abmessungen der Beleuchtungseinheit und der Anordnung der Lichtquellen möglich.

Ein weiterer Nachteil der edge-lit backlights liegt in der geringen zur Verfügung stehenden Fläche zur Einkopplung des Lichts in die lichtführende Platte. Es werden daher Reflektoren benötigt, die das von der Lichtquelle abgestrahlte Licht konzentriert in die jeweilige Schmalseite der lichtführenden Platte einspiegeln. Werden aufgrund hoher geforderter Lichtleistungen jeweils mehrere Lichtquellen benötigt, so müssen diese dann möglichst dicht nebeneinander angeordnet werden, was Probleme bei der Wärmeabfuhr bereitet. Schließlich bedingt die seitliche Anordnung der Lichtquelle bzw. Lichtquellen relativ große Außenabmessungen der Beleuchtungseinheit, die die der nutzbaren, lichtabstrahlenden Fläche erheblich überschreiten können.

Bei der aus der eingangs genannten JP-09-304623 bekannten Beleuchtungseinheit weist die lichtführende Platte auf der der Lichtabstrahlfläche gegenüberliegenden Hauptseite parallele rinnenförmige Vertiefungen auf, die bis an eine lichtreflektierende Fläche eines Lichtkastens reichen und in denen Lichtquellen in Form von Leuchtstoffröhren angeordnet sind.

Der Erfindung liegt die Aufgabe zugrunde, eine möglichst weite Verteilung des Lichts jeder einzelnen Lichtquelle über die genannte Lichtabstrahlfläche zu erreichen, so daß auch bei einem Ausfall einer einzelnen Lichtquelle die Gleichmäßigkeit der Lichtvertellung nicht gestört wird.

Gemäß der Erfindung wird die Aufgabe durch die Anspruch 1 angegebene Beleuchtungseinheit gelöst.

Vorteilhafte Weiterbildungen der erfindungsgemäßen Beleuchtungseinheit sind den Unteransprüchen zu entnehmen.

Bei der erfindungsgemäßen Beleuchtungseinheit handelt es sich um ein back-lit backlight, bei dem Lichtquellen in Vertiefungen auf der von der Lichtabstrahlfläche abgewandten Seite einer lichtführenden Platte angeordnet sind, wobei die lichtführende Platte Volumenelemente mit unterschiedlichen Brechungsindizes zur gleichmäßigen Lichtverteilung enthält. Die Volumenelemente mit ihren jeweiligen Grenzflächen sind statistisch in der lichtführenden Platte verteilt, so daß in der Platte geführtes Licht durch optische Brechung gleichmäßig verteilt und über die Lichtabstrahlfläche aus der lichtführenden Platte ausgekoppelt wird. Die Lichtstreuung wird also durch optische Brechung und nicht durch Absorption erzielt, so daß auch keine Absorptionsverluste auftreten. Das Licht kann daher in der lichtführenden Platte nicht nur auf kürzestem Wege von der jeweiligen Lichtquelle direkt zur Lichtabstrahlfläche hin gelangen, sondern sich auch im wesentlichen parallel zur Lichtabstrahlfläche weitgehend ungedämpft ausbreiten, um an einer von der betreffenden Lichtquelle weiter entfernten Stelle durch Brechung aus der Platte ausgekoppelt zu werden. Um die flächenhafte Lichtausbreitung innerhalb der lichtführenden Platte auch durch eine entsprechende Lichteinkopplung zu unterstützen, sind die Lichtquellen in den erwähnten Vertiefungen der lichtführenden Platte angeordnet. Die seitlichen Flanken der Vertiefungen weisen dabei zusätzlich treppenförmige Strukturen auf, die das auf sie auftreffende Licht der Lichtquellen im wesentlichen in Richtung der Flächenausdehnung der lichtführenden Platte in diese einkoppeln. Durch diese Maßnahmen wird erreicht, daß das Licht jeder einzelnen Lichtquelle möglichst weit über die gesamte Lichtabstrahlfläche verteilt wird, so daß auch bei einem Ausfall einer einzelnen Lichtquelle die Gleichmäßigkeit der Lichtverteilung nicht gestört wird.

Schließlich sind die einzelnen Lichtquellen aufgrund ihrer Anordnung in den Vertiefungen der lichtführenden Platte erschütterungsfrei gehalten. Die Bauhöhe der erfindungsgemäßen Beleuchtungseinheit ist dabei im wesentlichen durch die Dicke der lichtführenden Platte bestimmt und kann so sehr gering gehalten werden. Die lichtführende Platte kann unabhängig von den jeweiligen Abmessungen der Beleuchtungseinheit als Formteil durch Gießen oder Spritzen oder beispielsweise als Frästeil hergestellt werden, wobei ein nachträglicher Zuschnitt auf die jeweils benötigten Abmessungen möglich ist. Auf diese Weise ist eine sehr einfache Massenproduktion der Beleuchtungseinheit möglich.

Die lichtreflektierende Fläche ist vorgesehen, um auch von den Lichtquellen in Richtung von der Lichtabstrahlfläche weg abgestrahlte Lichtanteile effektiv in die lichtführenden Platte einkoppeln zu können. Licht, das von den Lichtquellen nicht unmittelbar in die lichtführende Platte eingekoppelt wird, wird an der lichtreflektierenden Fläche, vorzugsweise diffus, reflektiert und gelangt anschließend in die lichtführende Platte. Die Lichteinkopplung des reflektierten Lichts erfolgt dabei an den Flanken der in der lichtführenden Platte enthaltenen Vertiefungen, weswegen die Flanken sich bis zu der reflektierenden Fläche hin erstrecken. Die lichtführende Platte liegt dabei unmittelbar an der lichtreflektierenden Fläche an, so daß damit auch der Abstand zwischen den Lichtquellen und der lichtreflektierenden Fläche definiert ist und sich ein insgesamt sehr stabiler Aufbau der erfindungsgemäßen Beleuchtungseinheit ergibt. Die Öffnungsweite der Vertiefungen nimmt in Richtung auf die lichtreflektierende Fläche hin zu, so daß das reflektierte Licht unter einem günstigen Winkel in die lichtführende Platte gelangt, um sich dort im wesentlichen in Richtung der Flächenausdehnung der Platte auszubreiten.

Über die lichtreflektierende Fläche kann in vorteilhafter Weise auch die von den Lichtquellen erzeugte Verlustwärme abgeführt werden. Die lichtreflektierende Fläche ist dabei bevorzugt auf der Bodenplatte eines Lichtkastens ausgebildet, der die lichtführende Platte mit den Lichtquellen aufnimmt. Der Lichtkasten kann beispielsweise aus Stahlblech bestehen, wobei die Bodenplatte zur diffusen Lichtreflektion z.B. weiß lackiert ist. Die an den Schmalflächen der lichtführenden Platte anliegenden Innenflächen des Lichtkastens sind dabei vorzugsweise verspiegelt, so daß an den Schmalflächen austretendes Licht wieder in die lichtführende Platte zurückgespiegelt wird.

Die erschütterungsfreie Halterung der Lichtquellen in den Vertiefungen der lichtführenden Platte läßt sich noch dadurch verbessern, daß die Einbettung der Lichtquellen unter Zwischenlage eines transparenten Füllmaterials, insbesondere eines Klebers, erfolgt. In diesem Zusammenhang können Unregelmäßigkeiten bei der Lichtabstrahlung, die sich durch einen sehr geringen Abstand zwischen den Lichtquellen und der Lichtabstrahlfläche im Verhältnis zu dem Abstand der Lichtquellen untereinander ergeben können, dadurch eliminiert werden, daß das Füllmaterial lichtstreuende Eigenschaften mit einem höheren Lichtstreuungsgrad als dem der lichtführenden Platte aufweist. Im weiteren kann der das Füllmaterial enthaltende Spalt zwischen den Innenflächen der Vertiefungen und den Umfangsflächen der darin eingebetteten Lichtquellen in der Weise ausgebildet sein, daß die Spaltweite mit der Nähe zur Lichtabstrahlfläche der lichtführenden Platte zunimmt. Auf diese Weise wird erreicht, daß die Summe aus dem Lichtstreuungsgrad des transparenten Füllmaterials und dem Lichtstreuungsgrad der lichtführenden Platte zwischen der betreffenden Lichtquelle und von ihr unterschiedlich entfernten Punkten auf der Lichtabstrahlfläche annähernd gleich ist.

Für die erfindungsgemäße Beleuchtungseinheit kommen unterschiedliche Lichtquellen, z.B. Leuchtdioden oder flache Leuchtstofflampen, wie sie beispielsweise aus der WO 92/02947 bekannt sind, in Betracht. Vorzugsweise bestehen die Lichtquellen aus Leuchtstoffröhren, wobei die Vertiefungen als parallele Rinnen ausgebildet sind und die lichtreflektierende Fläche in einem vorgegebenen Abstand zu den Leuchtstoffröhren angeordnet ist. Die Leuchtstoffröhren strahlen das Licht über ihren Umfang gleichmäßig ab, wobei ein Teil des Lichts unmittelbar in die lichtführende Platte eingekoppelt wird und der andere Teil an der von den Leuchtstoffröhren beabstandeten lichtreflektierenden Fläche diffus reflektiert wird und anschließend in die lichtführende Platte gelangt. Neben den bereits erwähnten Vorteilen besteht ein weiterer Vorteil der teilweisen Einbettung der Leuchtstoffröhren in den rinnenförmigen Vertiefungen der lichtführenden Platte darin, daß sich die Leuchtstoffröhren relativ schnell auf ihre Betriebstemperatur erwärmen und damit eine optimale Lichtleistung erbringen. Andererseits wird eine Überhitzung der Leuchtstoffröhren dadurch vermieden, daß diese in einem vorgegebenen Abstand zu der lichtreflektierenden und wärmeabführenden Fläche angeordnet sind. Aufgrund dieses Abstandes ergibt sich nämlich ein nennenswerter Temperaturunterschied zwischen der jeweiligen Leuchtstoffröhre und der wärmeabführenden Fläche, wodurch der Wärmeabfluß von der Leuchtstoffröhre zu der wärmeabführenden Fläche begünstigt wird. Darüber hinaus ergibt sich durch den Abstand eine nur sehr geringe parasitäre elektrische kapazitive Kopplung zwischen den Leuchtstoffröhren und der wärmeabführenden Fläche, so daß Verluste bei der Ansteuerung der Leuchtstoffröhren vermieden werden.

In diesem Zusammenhang sind darüber hinaus vorzugsweise jeweils zwei parallele Leuchtstoffröhren an einem Ende elektrisch in Reihe geschaltet und an ihrem anderen Ende an einer Röhrentreiberschaltung (DC/AC-Inverter) angeschlossen, wobei die Röhrentreiberschaltung an einer der Schmalseiten der Beleuchtungseinrichtung angeordnet ist. Dadurch ergeben sich kürzestmögliche Leitungsverbindungen zwischen den Leuchtstoffröhren und der Röhrentreiberschaltung, so daß auch hier die kapazitiven Verluste minimal sind. Die Röhrentreiberschaltung ist dabei vorzugsweise in der Beleuchtungseinheit integriert, in dem sie in einen seitlichen Aufnahmefach des Lichtkastens angeordnet ist.

Zur weiteren Erläuterung der Erfindung wird im folgenden auf die Figuren der Zeichnung bezug genommen; im einzelnen zeigen
- Figur 1: einen Querschnitt durch ein Ausführungsbeispiel der erfindungsgemäßen Beleuchtungseinheit mit einer lichtführenden Platte und Leuchtstoffröhren,
- Figur 2: ein Beispiel für die Einbettung einer der Leuchtstoffröhren in einer Rinne der lichtführenden Platte,
- Figur 3: eine Draufsicht auf die Beleuchtungseinheit und
- Figur 4: einen Querschnitt durch ein weiteres Ausführungsbeispiel der erfindungsgemäßen Beleuchtungseinheit

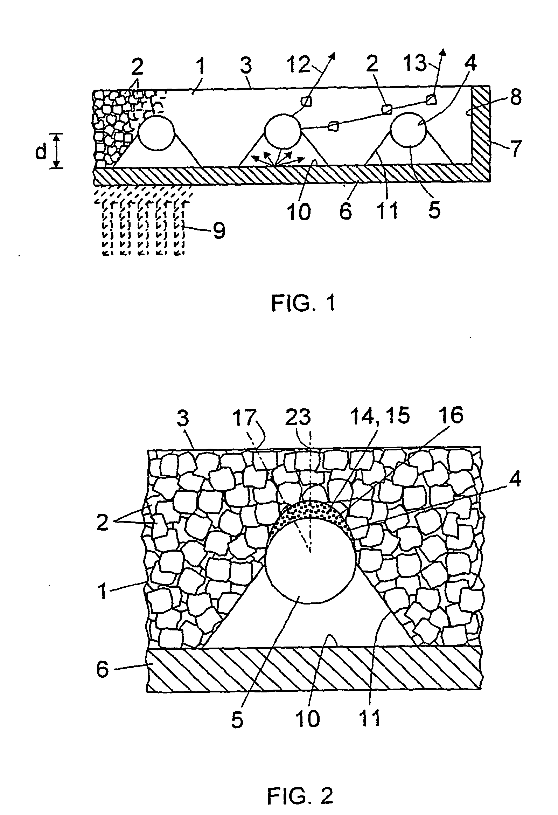

Die im Figur 1 im Querschnitt gezeigte Beleuchtungseinheit weist eine lichtführende Platte 1 auf, die hier nur teilweise und grob angedeutete Volumenelemente 2 mit unterschiedlichen optischen Brechungsindizes enthält. Die Volumenelemente 2 können beispielsweise in der Weise ausgebildet werden, daß Partikel eines ersten transparenten Materials durch Mischen oder Kneten gleichmäßig verteilt in ein weiteres transparentes Trägermaterial eingebracht werden. Eine Hauptseite der lichtführenden Platte 1 bildet die Lichtabstrahlfläche 3 der Beleuchtungseinheit. Auf der davon abgewandten Seite sind in der lichtführenden Platte 1 Vertiefungen, hier in Form von parallelen Rinnen 4, enthalten, in die als Lichtquellen Leuchtstoffröhren 5 eingebettet sind. Dabei liegen die Leuchtstoffröhren 5 jeweils mit einem Teil, hier etwa der Hälfte, ihrer Umfangsfläche an der Innenfläche der jeweiligen Rinne 4 an, während der andere Teil, hier die anderen Hälfte, freiliegt. In einem vorgegebenen Abstand d zu den Leuchtstoffröhren 5 ist eine lichtreflektierende Fläche 10 auf einer Bodenplatte 6 eines Lichtkastens 7 ausgebildet, der die lichtführende Platte 1 mit den darin eingebetteten Leuchtstoffröhren 5 aufnimmt. Die an den Schmalflächen der lichtführenden Platte 1 anliegenden Innenflächen 8 des Lichtkastens 7 sind verspiegelt. Der Lichtkasten 7 kann beispielsweise aus Stahlblech gefertigt sein, wobei die lichtreflektierende Fläche 10 beispielsweise von einer diffus spiegelnden weißen Lackschicht gebildet ist. Die über die Bodenplatte 6 erfolgende Abfuhr der Verlustwärme der Leuchtstoffröhren 5 kann, wie hier angedeutet, durch einen rückseitigen Kühlkörper 9 verbessert werden.

Die Flanken 11 der Rinnen 4 erstrecken sich hier bis zu der lichtreflektierenden Fläche 10, so daß die lichtführende Platte 1 auf der Bodenplatte 6 aufliegt. Der Abstand d zwischen den Leuchtstoffröhren 5 und der lichtreflektierenden Fläche 10 ist daher durch die Tiefe der Rinnen 4 bestimmt. Die Öffnungsweite der Rinnen 4 nimmt in Richtung auf die lichtreflektierende Fläche 10 hin zu, so daß die Flanken 11 im Bereich zwischen den Leuchtstoffröhren 5 und der lichtreflektierenden Fläche 10 unter einem schrägen Winkel verlaufen. Das von der Fläche 10 diffus reflektierte Licht gelangt daher unter einem.günstigen Winkel in die lichtführende Platte 1, um sich dort im wesentlichen in Richtung der Flächenausdehnung der Platte 1 auszubreiten. Weitere Ausbildungen der Flanken 11, beispielsweise entsprechend einem vorgegebenen Kurvenverlauf, sind denkbar. Die Flächen der Flanken 11 können darüber hinaus aufgerauht oder in sonstiger Weise strukturiert sein. Das von dem an den Innenflächen der Rinnen 4 anliegenden Teil der Umfangsfläche den Leuchtstoffröhren 5 abgestrahlte Licht wird unmittelbar in die lichtführende Platte 1 eingekoppelt.

Wie am Beispiel zweier Lichtstrahlen 12 und 13 verdeutlicht ist, wird das Licht durch optische Brechung an den Grenzflächen der Volumenelemente 2 im wesentlichen über die gesamte Flächenausdehnung der lichtführenden Platte 1 statistisch gleichmäßig verteilt. Da nahezu keine Absorption stattfindet, ist die Verteilung des von einer Leuchtstoffröhre 5 abgestrahlten Lichts zumindest im Bereich bis zur nächsten oder übernächsten Leuchtstoffröhre sehr gleichmäßig, so daß sich der Ausfall einer einzelnen Leuchtstoffröhre 5 nur unwesentlich bemerkbar macht.

Wie Figur 2 am Beispiel einer der Leuchtstoffröhren 5 zeigt, sind diese unter Zwischenlage eines transparenten Füllmaterials 14, hier eines Klebers, in den Rinnen 4 eingebettet. Dadurch wird nicht nur die Lagerung der Leuchtstoffröhren 5 in den Rinnen 4 stabilisiert, sondern auch die Lichteinkopplung in die lichtführende Platte 1 verbessert. Das transparente Füllmaterial 14 besteht hier in gleicher Weise wie die lichtführende Platte 1 aus Volumenelementen 15 mit unterschiedlichen Brechungsindizes, wobei jedoch aufgrund kleinerer Volumenelemente 15 und/oder anderer Materialien der Lichtstreuungsgrad des Füllmaterials 14 höher als der der lichtführenden Platte 1 ist. Die Rinne 4 ist hier in der Weise ausgebildet, daß sich zwischen ihrer Innenfläche und der Umfangsfläche der Leuchtstoffröhre 5 ein das transparente Füllmaterial 14 aufnehmender Spalt 16 ergibt, dessen Spaltweite mit der Nähe zur Lichtabstrahlfläche 3 zunimmt. Dadurch wird erreicht, daß die Lichtstreuung auch bei einem sehr geringem Abstand der Leuchtstoffröhre 5 zu der Lichtabstrahlfläche 3 weitgehend unabhängig von der Entfernung zwischen unterschiedlichen Punkten 17, 23 auf der Lichtabstrahlfläche 3 und der Leuchtstoffröhre 5 ist.

Das Licht, welches von der Leuchtstoffröhre 5 über den in der Rinne 4 freiliegenden Teil ihrer Umfangsfläche abgestrahlt wird, wird von der lichtreflektierenden Fläche 10 diffus reflektiert und an den schräg verlaufenden Flanken 11 in die lichtführende Platte 1 eingekoppelt.

Als Leuchtstoffröhren 5 werden hier Kaltkathoden-Röhren (CCFTs = cold cathode fluorescent tubes) verwendet, die eine maximale Lichtausbeute bei einer vorgegebenen Betriebstemperatur erreichen. Durch die teilweise Einbettung der Leuchtstoffröhren 5 in den Rinnen 4 der lichtführenden Platte 1 wird diese Betriebstemperatur sehr schnell erreicht. Andererseits wird eine Überhitzung der Leuchtstoffröhren 5 durch Ableitung ihrer Verlustwärme über die Bodenplatte 6 des Lichtkastens 7 verhindert. Aufgrund des Abstandes d zwischen den Leuchtstoffröhren 5 und der Bodenplatte 6 ergibt sich eine Temperaturdifferenz zwischen beiden, so daß dadurch der Wärmeabfluß verbessert wird. Weiterhin ist aufgrund des Abstandes d die parasitäre kapazitive Kopplung zwischen den Leuchtstoffröhren 5 und der leitfähigen Bodenplatte 6 nur sehr gering, so daß dadurch der Wirkungsgrad der Leuchtstoffröhren 5 bei ihrer Hochfrequenzansteuerung nicht beeinträchtigt wird.

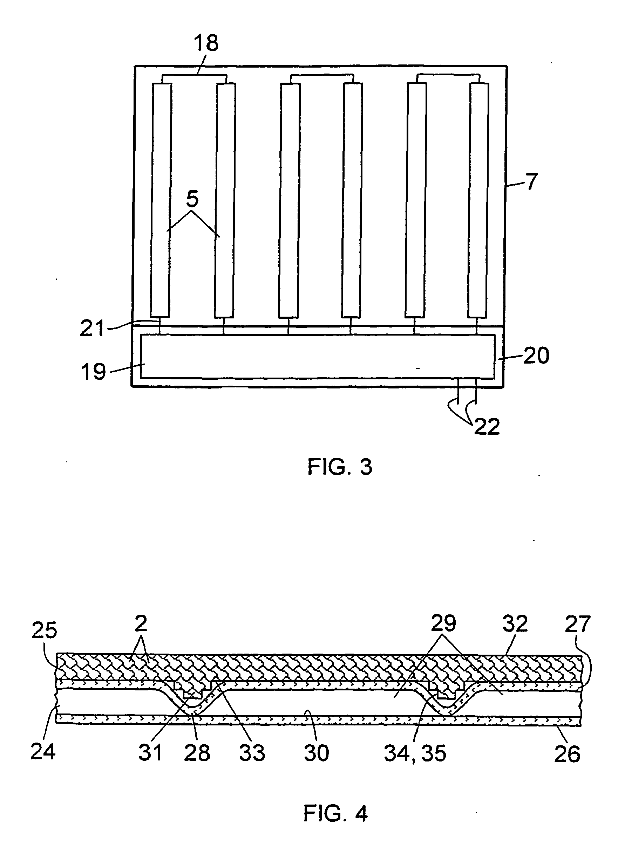

Figur 3 zeigt eine Draufsicht auf die Beleuchtungseinheit mit dem Lichtkasten 7 und den darin parallel angeordneten Leuchtstoffröhren 5. Jeweils zwei Leuchtstoffröhren 5 sind an einem Ende über eine elektrische Verbindung 18 in Reihe geschaltet und an ihren anderen Enden an einer Röhrentreiberschaltung 19 angeschlossen, die ihrerseits in einem seitlichen Aufnahmefach 20 des Lichtkastens 7 angeordnet ist und somit Bestandteil der Beleuchtungseinheit ist. Die Verbindungen 21 zwischen den Leuchtstoffröhren 5 und der Röhrentreiberschaltung 19 können so sehr kurz gehalten werden, so daß auch hier nur minimale kapazitive Verluste entstehen können. Die Röhrentreiberschaltung 19 wird über äußere Anschlüsse 22 mit einer niedrigen Gleichspannung, z.B. 24 V, betrieben.

Das in Figur 4 gezeigte Ausführungsbeispiel der erfindungsgemäßen Beleuchtungseinheit besteht aus einer flachen Leuchtstofflampe 24 und einer lichtführenden Platte 25, die ebenso, wie bei dem oben beschriebenen Ausführungsbeispiel, Volumenelemente 2 mit unterschiedlichen Brechungsindizes zur Lichtsteuung enthält. Die Leuchtstofflampe 24 besteht aus eine flachen Wandteil 26 und einem im Querschnitt wellenförmigen transparenten Wandteil 27, die beide aufeinander aufliegen und an den Berührungsstellen 28 gasdicht miteinander verbunden sind. Die so zwischen den beiden Wandteilen 26 und 27 ausgebildeten Kanäle bilden zueinander parallele zeilenförmige Lichtquellen 29 und enthalten hierzu eine geeignete Gasfüllung und hier nicht gezeigte Elektroden. Das wellenförmige transparente Wandteil 27 ist mit einem Leuchtstoff beschichtet, während das flache Wandteil 26 mit einer lichtreflektierenden Fläche 30 in Form einer Beschichtung versehen ist.

Die lichtführende Platte 25 liegt auf dem wellenförmigen transparenten Wandteil 27 der Leuchtstofflampe 24 auf und weist in den Bereichen der Berührungsstellen 28 zwischen den Wandteilen 26 und 27 Vorsprünge 31 auf, die in die Zwischenräume zwischen jeweils benachbarten Lichtquellen 29 hineinragen. Die lichtführende Platte 25 enthält somit auf der von ihrer Lichtabstrahlfläche 32 abgewandten Seite Vertiefungen 33, in denen die einzelnen Lichtquellen 29 angeordnet sind. Die Flanken 34 der Vertiefungen 33 bzw. der Vorsprünge 31 weisen, hier treppenförmige, Strukturen 35 auf, die das von den einzelnen Lichtquellen 29 seitlich abgestrahlte und auf sie auftreffende Licht im wesentlichen in Richtung der Flächenausdehnung der lichtführenden Platte 25 in diese einkoppeln. Dabei wird das Licht an parallel zur Lichtabstrahlfläche 32 liegenden Flächen der Treppenstruktur 35 reflektiert und an senkrecht dazu verlaufenden Flächen der Treppenstruktur 35 in die lichtführende Platte 25 eingekoppelt. Auch hier kann, wie bei dem in Figur 2 gezeigten Ausführungsbeispiel, der Spalt zwischen der lichtführenden Platte 25 und den Lichtquellen 29 ein transparentes Füllmaterial enthalten.

## Patentansprüche

1. Beleuchtungseinheit mit einer Volumenelemente (2) mit unterschiedlichen Brechungsindizes zur Lichtstreuung enthaltenden lichtführenden Platte (1, 25), die auf einer Hauptseite eine Lichtabstrahlfläche (3, 32) bildet und auf der anderen, gegenüberliegenden Hauptseite über die Fläche verteilte parallele rinnenförmige Vertiefungen (4, 33) enthält, wobei sich die seitlichen Flanken (11, 34) der Vertiefungen (4, 33) bis zu einer lichtreflektrierenden Fläche (10, 30) erstrecken, an der die die Vertiefungen (4, 33) enthaltende Hauptseite der lichtführenden Platte (1, 25) anliegt, und wobei in den Vertiefungen (4, 33) einzelne Lichtquellen (5, 29) angeordnet sind, **dadurch gekennzeichnet, daß** die Öffnungsweite der Vertiefungen (4, 33) in Richtung auf die lichtreflektierende Fläche (10, 30) hin zunimmt und daß die seitlichen Flanken (11, 34) der Vertiefungen (4, 33) treppenförmige Strukturen (35) aufweisen, die das auf sie auftreffende Licht der Lichtquellen (5,29) in wesentlichen in Richtung der Flächenausdehnung der lichtführenden Platte (1,25) in diese einkoppeln.

2. Beleuchtungseinheit nach Anspruch 1, **dadurch gekennzeichnet, daß** die lichtreflektierende Fläche (10) auf der Bodenplatte (6) eines Lichtkastens (7) ausgebildet ist, der die lichtführende Platte (1) mit den Lichtquellen (5) aufnimmt.

3. Beleuchtungseinheit nach Anspruch 2, **dadurch gekennzeichnet, daß** die an den Schmalflächen der lichtführenden Platte (1) anliegenden Innenflächen (8) des Lichtkastens (7) verspiegelt sind.

4. Beleuchtungseinheit nach einem der vorangehenden Ansprüche, **dadurch gekennzeichnet, daß** die Lichtquellen (5, 29) unter Zwischenlage eines transparenten Füllmaterials (14), insbesondere eines Klebers, in den Vertiefungen (4, 33) eingebettet sind.

5. Beleuchtungseinheit nach Anspruch 4, **dadurch gekennzeichnet, daß** das Füllmaterial (14) lichtstreuende Eigenschaften mit einem höheren Lichtstreuungsgrad als dem der lichtführenden Platte (1, 25) aufweist.

6. Beleuchtungseinheit nach Anspruch 5, **dadurch gekennzeichnet, daß** zwischen den Innenflächen der Vertiefungen (4, 33) und den Umfangsflächen der darin eingebetteten Lichtquellen (5, 29) jeweils ein das Füllmaterial (14) enthaltender Spalt (16) ausgebildet ist, dessen Spaltweite mit der Nähe zur Lichtabstrahlfläche (3, 32) der lichtführenden Platte (1, 25) zunimmt.

7. Beleuchtungseinheit nach einem der vorangehenden Ansprüche, **dadurch gekennzeichnet, daß** die Lichtquellen aus Leuchtstoffröhren (5) bestehen.

8. Beleuchtungseinheit nach Anspruch 7, **dadurch gekennzeichnet, daß** jeweils zwei parallele Leuchtstoffröhren (5) an einem Ende elektrisch in Reihe geschaltet sind und an ihren anderen Enden an einer Röhrentreiberschaltung (19) angeschlossen sind, die an einer der Schmalseiten der Beleuchtungseinheit angeordnet ist.

9. Beleuchtungseinheit nach Anspruch 8 in Verbindung mit Anspruch 2 oder 3, **dadurch gekennzeichnet, daß** die Röhrentreiberschaltung (19) in einem seitlichen Aufnahmefach (20) des Lichtkastens (7) angeordnet ist.

## Claims

1. Lighting unit having a light-guiding plate (1, 25) containing volume elements (2) with different refractive indices for light scattering, which forms a light emission surface (3, 32) on a main side and contains parallel groove-shaped indentations (4, 33) distributed over the surface on the other main side lying opposite, the lateral flanks (11, 34) of the indentations (4, 33) extending as far as a light-reflecting surface (10, 30) on which the main side of the light-guiding plate (1, 25) that contains the indentations (4, 33) bears, and individual light sources (5, 29) being arranged in the indentations (4, 33), **characterized in that** the aperture width of the indentations (4, 33) increases in the direction towards the light-reflecting surface (10, 30) and **in that** the lateral flanks (11, 34) of the indentations (4, 33) have staircase-shaped structures (35), which input the light striking them from the light sources (5, 29) into the light-guiding plate (1, 25) essentially in the direction of its surface extent.

2. Lighting unit according to Claim 1, **characterized in that** the light-reflecting surface (10) is formed on the base plate (6) of a light box (7), which holds the light-guiding plate (1) with the light sources (5).

3. Lighting unit according to Claim 2, **characterized in that** the inner surfaces (8) of the light box (7) bearing on the narrow surfaces of the light-guiding plate (1) are mirrored.

4. Lighting unit according to one of the preceding claims, **characterized in that** the light sources (5, 29) are embedded in the indentations (4, 33) with the interposition of a transparent filler material (14), particularly an adhesive.

5. Lighting unit according to Claim 4, **characterized in that** the filler material (14) has light-scattering properties with a light scattering factor higher than that of the light-guiding plate (1, 25).

6. Lighting unit according to Claim 5, **characterized in that** a gap (16) containing the filler material (14) is respectively formed between the inner surfaces of the indentations (4, 33) and the circumferential surfaces of the light sources (5, 29) embedded therein, the gap width of which increases with the proximity to the light emission surface (3, 32) of the light-guiding plate (1, 25).

7. Lighting unit according to one of the preceding claims, **characterized in that** the light sources consist of fluorescent tubes (5).

8. Lighting unit according to Claim 7, **characterized in that** every two parallel fluorescent tubes (5) are connected in series at one end and are connected at their other ends to a tube driver circuit (19) which is arranged on one of the narrow sides of the lighting unit.

9. Lighting unit according to Claim 8 in conjunction with Claim 2 or 3, **characterized in that** the tube driver circuit (19) is arranged in a lateral holding compartment (20) of the light box (7).

## Revendications

1. Unité d'éclairage, comportant une plaque photoémettrice (1, 25), contenant des éléments de volume (2) ayant différents indices de réfraction pour permettre une diffusion de la lumière, plaque qui, sur une face principale, forme une surface (3, 32) rayonnant la lumière, et qui, sur l'autre face principale, opposée, contient des renfoncements (4, 33) en forme de rainures, parallèles et réparties sur la surface, les flancs latéraux (11, 34) des renfoncements (4, 33) s'étendant jusqu'à une surface (10, 30) réfléchissant la lumière, contre laquelle s'appuie la face principale, contenant les renfoncements (4, 33), de la plaque photoémettrice (1, 25), et dans laquelle des sources de lumière individuelles (5, 29) sont disposées dans les renfoncements (4, 33), **caractérisée en ce que** le diamètre d'ouverture des renfoncements (4, 33) augmente dans la direction allant vers la surface (10, 30) réfléchissant la lumière, et que les flancs latéraux (11, 34) des renfoncements (4, 33) comportent des structures en escalier (35), qui vont envoyer la lumière, qui tombe sur elles, des sources de lumière (5, 29) pour l'essentiel dans la direction de l'extension en surface de la plaque photoémettrice (1, 25).

2. Unité d'éclairage selon la revendication 1, **caractérisée en ce que** la surface (10) réfléchissant la lumière est réalisée sur la plaque de fond (6) d'un caisson lumineux (7), lequel loge la plaque photoémettrice (1) comportant les sources de lumière (5).

3. Unité d'éclairage selon la revendication 2, **caractérisée en ce que** les surfaces intérieures (8), s'appuyant contre les petits côtés de la plaque photoémettrice (1), du caisson lumineux forment miroir.

4. Unité d'éclairage selon l'une des revendications précédentes, **caractérisée en ce que** les sources de lumière (5, 29) sont noyées dans les renfoncements (4, 33), avec interposition d'une matière de remplissage transparente (14), en particulier d'un adhésif.

5. Unité d'éclairage selon la revendication 4, **caractérisée en ce que** la matière (14) de remplissage présente des propriétés de diffusion de la lumière, avec un degré de diffusion de la lumière plus grand que celui de la plaque photoémettrice (1, 25).

6. Unité d'éclairage selon la revendication 5, **caractérisée en ce qu'**entre chacune des surfaces intérieures des renfoncements (4, 33) et des surfaces périphériques des sources de lumière (5, 29) qui y sont noyées, on a réalisé une fente (16), contenant la matière de remplissage (14), fente dont la largeur augmente d'autant plus qu'elle se rapproche de la surface (3, 32), rayonnant la lumière, de la plaque photoémettrice (1, 25).

7. Unité d'éclairage selon l'une des revendications précédentes, **caractérisée en ce que** les sources de lumière sont constituées de tubes fluorescents (5).

8. Unité d'éclairage selon la revendication 7, **caractérisée en ce que** deux tubes fluorescents parallèles (5) sont montés en l'une de leurs extrémités en série du point de vue électrique, et, en leur autre extrémité, sont raccordés à un circuit d'attaque de tube (19), qui est disposé sur l'un des petits côtés de l'unité d'éclairage.

9. Unité d'éclairage selon la revendication 8 en liaison avec la revendication 2 ou 3, **caractérisée en ce que** le circuit d'attaque de tube (19) est disposé dans un compartiment latéral (20) du caisson lumineux (7).
